# EUROPEAN PATENT SPECIFICATION

(11) **EP 0 447 941 B1**
(45) Date of publication and mention of the grant of the patent: **08.06.1994**
(21) Application number: 91103856.0
(22) Date of filing: 13.03.1991
(51) Int. Cl.: F16D 65/52, F16D 55/22

(54) **Electromagnetic brake**
Elektromagnetische Bremse
Frein électromagnétique

(30) Priority: 13.03.1990 FI 901247
(43) Date of publication of application: 25.09.1991
(73) Proprietor: KONE OY, 00330 Helsinki 33 (FI)
(72) Inventor: Kuivamäki, Ismo, SF-01300 Vantaa (FI)
(74) Representative: Zipse + Habersack

(56) References cited:
- CH-A- 396 531
- DE-B- 1 675 157
- DE-B- 1 914 469
- US-A- 3 613 838

## Description

The present invention relates to an electromagnetic brake as defined in the introductory part of claim 1.

In electromagnetic disc brakes, due to the wear of the friction surfaces and the brake wheel, the air gap formed between the electromagnet coil and the anchor plate in the closed position of the brake increases, leading to a decreased attraction of the magnet, difficulties in the releasing of the brake and a decreased spring force. The result is a reduced brake torque. In addition, the large air gap increases the speed of the anchor plate movement, thus increasing the force applied to the friction surfaces. The result of this is a high peak in brake torque which imposes a stress on the brake and other structures and deteriorates the operating characteristics of the brake. Moreover, the reliability of the brake suffers due to the higher stress level, and the stresses may become uncontrollable due to insufficient servicing.

FI publication 75653 proposes an electromagnetic disc brake in which, when the brake is closed, a constant gap between the electromagnet coil and the anchor plate is maintained by means of a stepless adjusting device provided with balls running in groove tracks at that end where the electromagnet frame is located or with a wedge placed between the frame and the electromagnet coil, said wedge moving downwards due to its own weight, thereby adjusting the size of the air gap.

The object of the present invention is to achieve improved adjustment of the air gap in an electromagnetic brake. The features characteristic of the electromagnetic brake of the invention are presented in the claims.

The invention achieves a brake with a constant air gap, which means that a smaller brake magnet can be used. Moreover, the brake permits the presence of a large number of tolerances, and the working clearance can be adjusted by means of pins. The adjustment is even and simple and remains functional at least as long as the wear surfaces of the brake last.

In the following, the invention is described in detail by the aid of examples referring to the attached drawings, in which:

Fig. 1 presents a disc brake constructed as provided by the invention.

Figs. 2a and 2b present the anchor plate in side view and in end view.

Fig. 3 presents an adjusting plate.

Fig. 4 represents another disc brake constructed according to a preferred embodiment of the invention.

Fig. 5a till 5d present magnet houses with alternative elastic components in perspective views.

Fig. 6 presents a detail from the threads connection between brake housing and anchor plate in a certain situation at an enlarged scale.

Fig. 7 presents another disc brake constructed as provided by the invention.

Fig. 8 presents a drum brake constructed as provided by the invention.

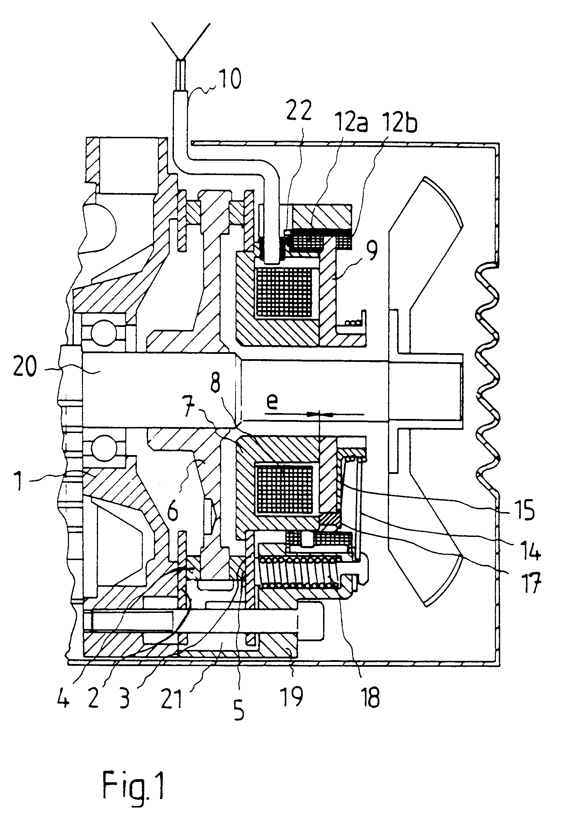

Fig. 1 represents the working brake of an electric motor used e.g. as a hoisting motor in a crane, in which the brake magnet air gap is self-adjusting. The brake comprises an end shield 1, to which one of the friction plates 2 is attached. Between the friction plates 2 and 3, which are provided with linings 4 and 5, is a brake wheel 6. One 3 of the friction plates is coupled with an electromagnet, which consists of a magnet housing 7 fixed to the friction plate and a winding 8 inside it. The groove of the magnet housing points away from the motor in the direction where the anchor plate 9 is located.

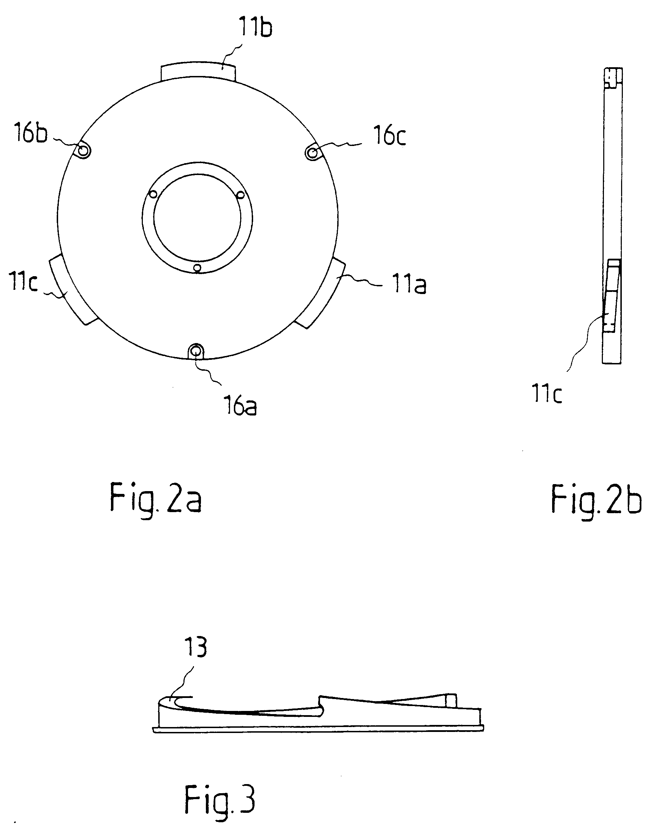

When the magnet receives a current via conductor 10, the result is that the magnetic circuit is closed by the anchor plate 9. The anchor plate is provided with three pitched vanes 11a- 11c as illustrated by Figs. 2a and 2b, and it is disposed in a flat thread with three pitched tracks by placing it between two identical adjustment rings 12a and 12b provided with three-track flat thread surfaces 13 as illustrated by Fig. 3.

The anchor plate is rotated by means of a coiled spring 14 wound about a spring box 15 located around the cylindrical extension of the anchor plate 9. The anchor plate 9 is provided with holes 16a - 16c accommodating pins 17 loaded by a pre-tensioned spring, e.g. a cup spring. The pins 17 protrude from the anchor plate 9 on the side facing the magnet by a distance equalling the working clearance e.

When no current is flowing in the brake magnet coil, the magnet-friction plate assembly is pushed against the brake wheel 6 by brake springs 18, which are backed by the brake housing 19, and the braking action is started. At this instant, there is a certain working clearance e between the magnet 7, 8 and the anchor plate. This clearance equals the length of the protruding parts of the pins 17 minus the anchor plate tolerance. As the braking surfaces get thinner due to wear, the air gap between the magnet 7, 8 and anchor 9 increases. Consequently, the anchor plate 9 is rotated in its thread by coiled spring 14 until the pin ends meet the magnet. The force of the coiled spring does not exceed the force of the cup spring pressing the pins out through the anchor plate 9. Thus, the adjusting motion is stopped as the pin ends meet the magnet 7, 8, and the wear of the brake surfaces has been compensated. The compensation is stepless.

The next time the power to the magnet is switched on, an attractive force is generated between the magnet and the anchor, but, since the anchor 9 is in a self-retaining thread, it cannot move in the direction of the axle 20. Instead, the magnet must move in the direction of the axle. The magnet is a moment-locked magnet, and it cannot rotate. The attraction of the magnet exceeds the sum of the force of the brake springs 18 and the pressure of the pins 17 and starts moving towards the anchor plate 9, pressing in the pins 17 against the force of the cup spring. The air gap between the magnet 7, 8 and the anchor 9 is reduced to nil. The magnet has moved backwards, thereby producing a working clearance between the friction plate 3 and the brake wheel 6. An auxiliary spring 21 distributes the clearance evenly on either side of the brake wheel.

To damp the anchor plate impacts, the brake is provided with a circular spring 22 placed in front of the foremost adjustment ring 12a.

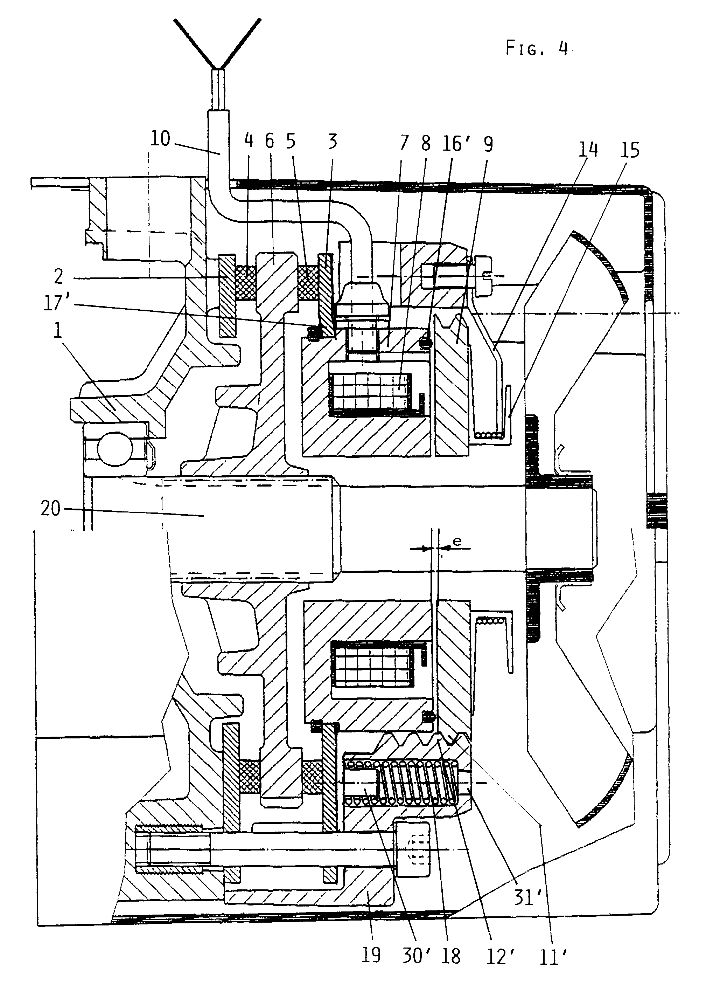

In the solution of Fig. 4 the pins are replaced by an O-ring construction and the O-ring is placed in the magnet housing against the anchor plate. Similar parts are designated by the aforementioned numerals. The groove of the magnetic housing points towards the motor.
In Fig. 4, the brake magnet is unenergized. The brake springs 18 (n pcs) which are backed by the brake housing 19 press the friction plate- magnet -assembly against the brake wheel 6, which is supported on the shaft 20 by splines enabling it to move axially, thus allowing the brake wheel to be pressed against the other friction plate so that the wheel is braked.

In this brake, the outer surface of the anchor 9 is provided with a thread 11′ which engages a corresponding thread 12′ provided in the brake housing 19. Therefore, the anchor 9 is able to rotate in the thread 12′ in the brake housing 19. To rotate the anchor, the brake is provided with a coiled spring 14 placed in a separate spring-box 15 provided in the end face of the anchor. The spring box protects the spring box against entanglement and accidental unwinding as well as against hitting other parts of the brake. As the air gap e between the magnet 7 and anchor 9 gradually increases due to waer, the coil spring rotates the anchor until the latter touches an O-ring 16′ mounted in a groove in the end face of the magnet.

When electric current is supplied to the magnet winding 8, a magnetic attraction is set up between the magnet and the anchor 9. The attraction first eliminates the axial clearance between the threads 11′, 12′ on the anchor 9 and brake housing 19. Thus, the width of the gap in which the brake wheel 6 rotates eguals the O-ring protrusion minus the axial clearance between said threads.

Since the attractive force of the brake magnet is the greater the narrower is the air gap, it will be advantageous to make the air gap as narrow as possible. This allows minimization of the magnet size and the costs. However, the use of a minimal air gap requires control over the working clearance of the wheel to ensure that it will not become too narrow. This again requires that this clearance should not be reduced due to other clearances in the brake.

In this brake construction, the joint between the magnet and one of the friction plates has no play. This is achieved by "calibrating" the thickness of the friction plate. The calibration is implemented by bending small collets 17′ outwards from the plane of the plate. Calibration is necessary because the thickness of standard steel plate varies too much. For instance, in the case of 4 mm hot-rolled steel plate, the allowed thickness variation is +0.6/- 0.4 mm (DIN 1543). Without calibration of plate thickness, the axial space for the friction plate on the outer surface of the magnet should be determined according to the largest permitted plate thickness. In the worst case, this would lead to an axial clearance as large as 1 mm (in the case of minimum allowed plate thickness).

The O-ring 16′ placed in a groove in the end face of the magnet 7 has been selected as a means of limiting the rotation (=axial adjustment) of the anchor 9 for the following reasons:
- The protrusion of an O-ring need not be adjusted.
- An O-ring is preferred to spring-loaded pins because it is a better guard against overcompensation of the wear of the brake linings, i.e. against excessive reduction of the air gap between anchor and magnet too much. In the pin-and-spring construction, overcompensation is a drawback caused by the fact that, when the anchor hits the thread side facing the magnet, the force always generates a tangential component which tends to rotate the anchor in the direction of the thread pitch. In the pin-and-spring construction, the frictional force between the pin ends and the anchor may be insufficend to overcome this tangential component of the impact force. This can lead to overcompensation of brake lining wear and the air gap is reduced to nil, with the result that the brake cannot be released at all.

The O-ring construction prevents overcompensation in three ways:
- The frictional force between the O-ring and the anchor is large because of the high rubber/steel friction coefficient.
- Due to the high friction coefficient, overcompensation generates a shear force in the O-ring. A force perpendicular to the shear force in the rubber returns the anchor, i.e. rotates it backwards, thus preventing overcompensation.
- The spring constant of rubber is steep, even progressive. Therefore, overcompensation causes a sharp increase in the frictional force between the O-ring and the anchor.
- The O-ring damps the impacts.

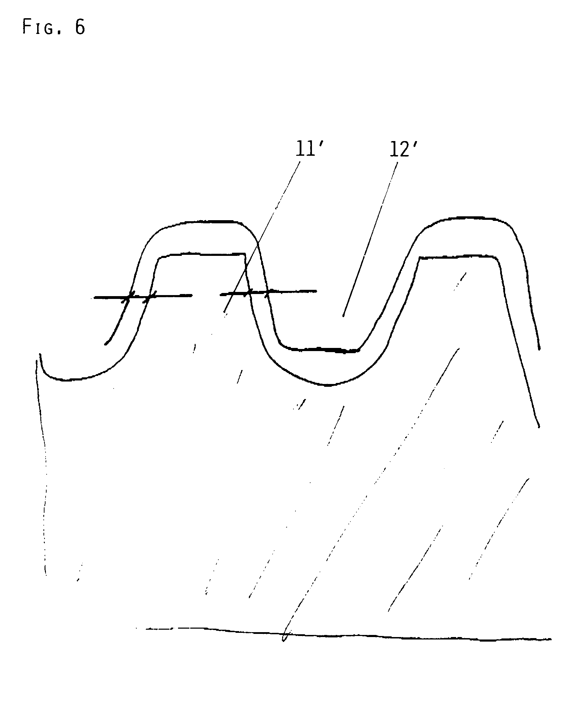

The function of the regulation is as follows:
When the brake magnet is unenergized the brake springs press the friction-plate-magnet assembly against the brake wheel. When the magnet has moved a short distance, there is a certain moment when the situation is such as there is a clearance on the both sides of the anchor thread. In this situation it looks like the anchor is "in the air" (see Fig. 6).

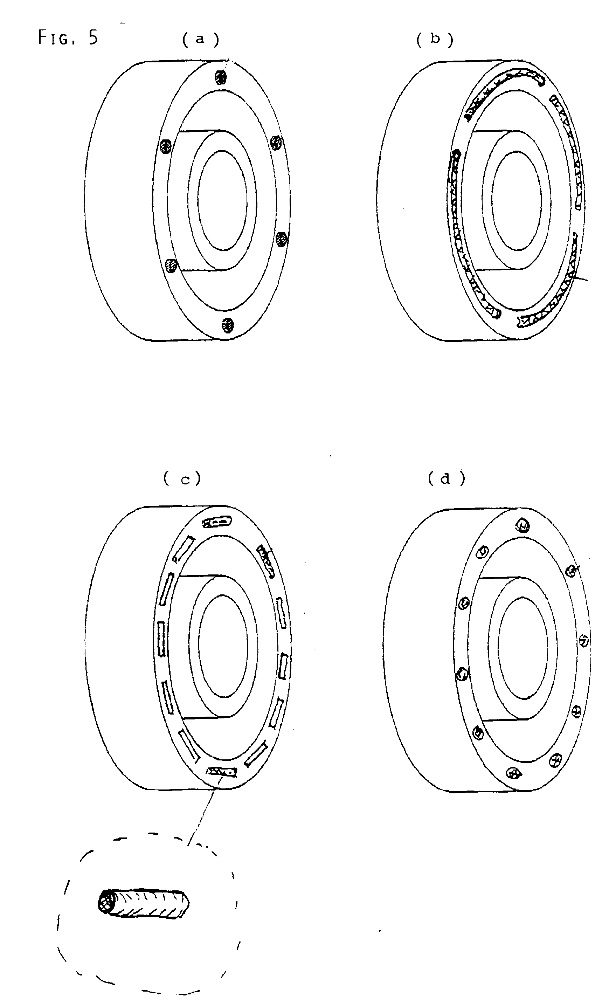

In the construction of Fig. 4, instead of using an O-ring also some other elastic components may be used according to Fig. 5a - 5d, but with minor chance of preventing over-compensation. Those components are for instance elastic pins (Fig. 5a), bands (Fig. 5b), bars (Fig. 5c) or balls (Fig. 5d).

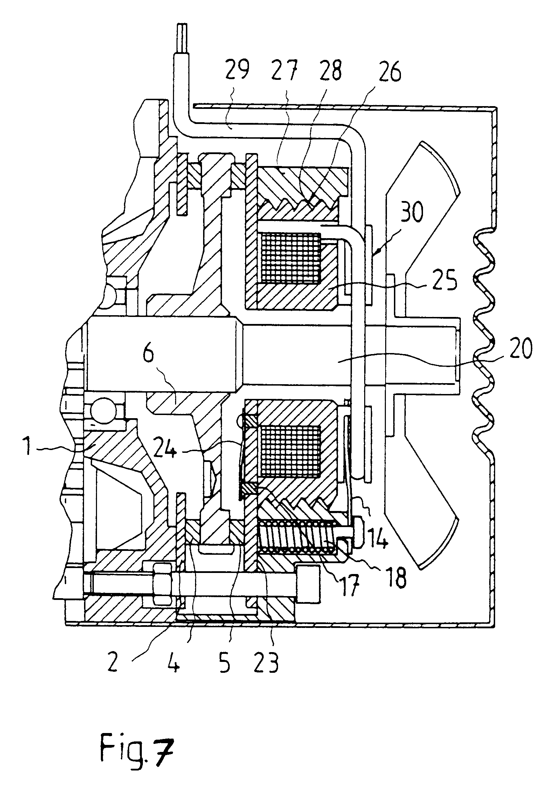

In the solution presented in Fig. 7, one 23 of the friction plates acts as an anchor plate, with spring elements 24 pressing the pins 17. The groove of the magnet housing 25 points towards the motor. The magnet housing is provided with an external thread 26 fitting into the internal thread 28 of the counterpart 27. The conductor 29 passes round the axle 20 inside a protecting shield 30.

The brake housing thread matching the anchor plate thread (Fig. 4) or the magnet housing thread (Fig. 7) is not continous but is divided into four parts. Regardless of the anchor or magnet housing position, the midpoints of these parts are always at an angle of 45° relative to the horizontal and vertical axes. This arrangement allows the dust and dirt accumulated in the threads to fall down from the thread. Thus the threads in the brake housing are self-cleaning. The self-cleaning effect is promoted by the axial anchor motion occurring each time when power is switched on/off.

The outer end of the coiled spring 14 can be fastened on the brake housing 19 or 27 respectively at a selectable position at 15° distances, the brake housing being provided with holes or cut-outs to allow the spring end to be fastened with a screw.

The brake housing 19 is provided with a cut-out for the brake magnet supply cable 10. This cut-out accommodates a cable seal which, besides sealing the cable, also prevents the magnet from rotating, which is necessary to ensure correct operation of the adjustment and to protect the cable against damage by attrition. These holes and cut-outs allow auxiliary equipment and attachments to be fastened without extra machining.

The brake housing is provided with lugs (not shown) which
- position the brake housing in the axial direction;
- permit moment-locking of the brake parts by means of screws;
- protect the friction plate lugs against impacts.

The brake housing 19 comprises sleeves 30′ (Fig. 4) placed inside the brake springs 18 and provided with an internal thread. By inserting threaded bolts through corresponding holes 31′ in the brake housing and screwing them into the sleeves, the brake springs can be prevented from being released when the brake is dismantled e.g. in connection with maintenance operations.

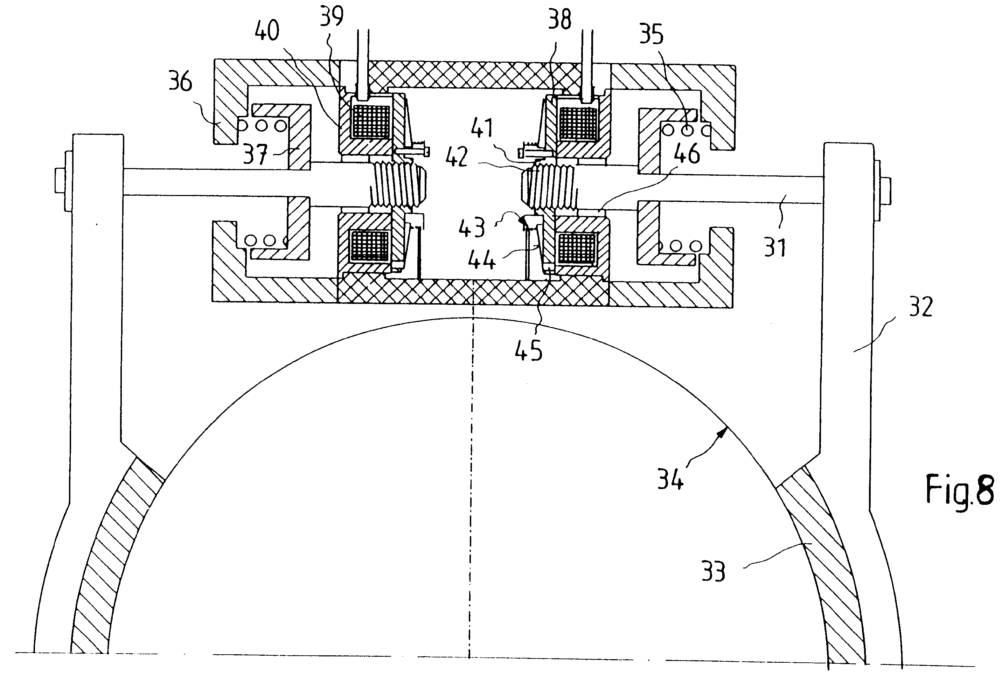

Fig. 8 presents an automatically adjusted drum brake provided with brake arms 32 actuated by push/pull rods 31. The ends of the brake arms are provided with brake linings 33 which engage the brake wheel 34 during braking. Brake springs 35 provided between the frame 36 and stoppers 37 apply a pressure to the push/pull rods 31, with the result that the width of the air gap between the anchor 38 and the magnet 39, 40 tends to increase due to the wear of the brake linings. The anchor 38 is connected to the push/pull rods by threads 41, 42, and it is also subject to the force of a coiled spring 43. When the power to the brake magnet is disconnected, the coiled springs cause the anchors 38 to rotate on the threads 42 of the push/pull rods until the spring-loaded (cup springs 44) pins 45 meet the magnet surface.

Guide bushings 46 ensure that the anchor faces are always aligned in a direction sufficiently close to parallel with the corresponding magnet surfaces. The adjusting threads 41, 42 must be self-retaining. As can be seen from Fig. 5, the two halves of the drum brake are symmetrical.

It is obvious to a person skilled in the art that different embodiments of the invention are not restricted to the examples described above, but that they may instead be varied within the scope of the following claims.

## Claims

1. Electromagnetic brake, comprising a brake wheel (6,34), at least one friction surface (lining 4,5,33) touching the brake wheel during braking and attached to a friction plate (2,3) moved by one or more brake springs (18,35) and/or by other members (31,32) used to transmit the braking power, at least one electromagnet (7,8,25,39,40) and an anchor (9,23,38), said magnet and anchor serving to disengage the friction surface from the brake wheel when a current is supplied to the magnet, and means for compensating the wear of the friction surface and for maintaining an essentially constant clearance between the magnet and the anchor when the brake is in the closed state, **characterized** in that the means used for compensating the wear of the friction surface consist of threads (11a-11c,13;11,12′;26,28;41,42) provided in the anchor/magnet (9,38/25) and one or more counterparts (12a,12b,19,27,31) and of a device (14,43) moving the anchor/magnet in the threads axially towards the magnet/anchor, that the means maintaining a constant clearance consist of elastic components (17, 16′, 45) attached to the magnet/anchor and protruding in a direction towards the anchor/magnet by a certain distance, the spring force maintaining said protrusion exceeding the force moving the anchor/magnet towards the magnet/anchor for compensating the wear.

2. Brake according to claim 1, **characterized** in that the elastic components comprise an O-ring construction (16′), elastig pins, bands, bars or balls.

3. Brake according to claim 1, **characterized** in that the elastic components comprise at least one spring loaded pin (17, 45).

4. Brake according to any of claims 1-3, **characterized** in that the device moving the magnet/anchor axially towards the anchor/magnet for compensating the wear is a coiled spring (14,43).

5. Brake according to claim 4, **characterized** in that it is a disc brake and the coiled spring (14) is placed around the axle (20) of the motor.

6. Brake according to claim 4, characterised in that it is a drum brake provided with at least one brake arm (32) which transmits the braking power and to which the friction surface (33) is attached, and which is connected to a push/pull rod (31) passing through the electromagnet and anchor and moved by these and a brake spring, whereby the coiled spring (43) is placed on the shaft of the push/pull rod (31).

7. Brake according to any one of the preceding claims, **characterized** in that the anchor (9) is provided with pitsched vanes (11a-11c) or threads (11′),placed on its outer edge and that it is mounted between two identical adjustment rings (12a-12b) provided with flat thread surfaces fitted to accommodate the vanes (11a-11c) or inside corresponding threads (12′) provided in the brake housing (19).

8. Brake according to any one of the preceding claims, **characterized** in that, to damp the impacts of the anchor (9), the brake is provided with a circular spring (22) or equivalent placed on that side of the adjustment ring next to the magnet which faces towards the magnet.

9. Brake according to any one of claims 1 - 6, **characterized** in that the exterior or interior surface of the anchor (9,38) is provided with a thread (26,41) fitted to a thread (28,42) on a counterpart, such as the push/pull rod (31) of a drum brake, to allow the anchor to be moved in the axial direction.

10. Brake according to any one of the preceding claims, **characterized** in that the threads are self-retaining.

## Revendications

1. Frein électromagnétique, comprenant une roue de frein (6,34), au moins une surface de friction (revêtement 4,5,33) qui vient en contact avec la roue de frein pendant le freinage et qui est fixée à une plaque de friction (2,3) déplacée par un ou plusieurs ressorts de frein (18,35) et/ou par d'autres organes (31, 32) utilisés pour transmettre la puissance de freinage, au moins un électroaimant (7,8,25,39,40) et une plaque d'ancrage (9,23,38), ledit aimant et ladite plaque d'ancrage servant à éloigner la surface de friction de la roue de frein lorsqu'un courant est fourni à l'aimant, et des moyens de compensation de l'usure de la surface de friction et de maintien d'un jeu sensiblement constant entre l'aimant et la plaque d'ancrage lorsque le frein est dans l'état serré, caractérisé en ce que les moyens utilisés pour compenser l'usure de la surface de friction consistent en filetages (11a-11c , 13;11′,12′;26,28;41,42) prévus dans la plaque d'ancrage/aimant (9,38/25) et une ou plusieurs pièces complémentaires (12a,12b,19,27,31), et en un dispositif (14,43) déplaçant la plaque d'ancrage/aimant dans les filetages axialement vers l'aimant/plaque d'ancrage, et en ce que les moyens de maintien d'un jeu constant consistent en des éléments élastiques (17,16′, 45) fixés à l'aimant/plaque d'ancrage et faisant saillie d'une certaine distance vers la plaque d'ancrage/aimant, la force élastique de maintien de ladite saillie étant supérieure à la force de déplacement de la plaque d'ancrage/aimant vers l'aimant/plaque d'ancrage, pour compenser l'usure.

2. Frein suivant la revendication 1, caractérisé en ce que les éléments élastiques comprennent un joint torique (16′), des tiges élastiques, des bandes, des barreaux ou des billes.

3. Frein suivant la revendication 1, caractérisé en ce que les composants élastiques comprennent au moins une tige chargée par ressort (17,45).

4. Frein suivant une quelconque des revendications 1 à 3, caractérisé en ce que le dispositif déplaçant l'aimant/plaque d'ancrage axialement vers la plaque d'ancrage/aimant pour compenser l'usure est un ressort hélicoïdal (14,43).

5. Frein suivant la revendication 4, caractérisé en ce qu'il est un frein à disque et le ressort hélicoïdal (14) est placé autour de l'arbre (20) du moteur.

6. Frein suivant la revendication 4, caractérisé en ce qu'il est un frein à tambour comportant au moins un bras de frein ( 32 ) qui transmet la puissance de freinage et auquel est fixée la surface de friction (33), et qui est relié à une tige de poussée/traction (31) traversant l'électroaimant et la plaque d'ancrage et déplacée par ces derniers et par un ressort de frein, dans lequel le ressort hélicoïdal (43) est placé sur l'axe de la tige de poussée/traction (31).

7. Frein suivant une quelconque des revendications précédentes, caractérisé en ce que la plaque d'ancrage (9) comporte des ailettes inclinées (11a-11c) ou des filets (11′), prévus sur son bord extérieur, et en ce qu'elle est montée entre deux anneaux de réglage identiques (12a-12b) présentant des surfaces de filets à plat prévues pour recevoir les ailettes (11a-11c) ou des filets intérieurs correspondants (12′) prévus dans le boîtier de frein (19).

8. Frein suivant une quelconque des revendications précédentes, caractérisé en ce que, pour amortir les impacts de la plaque d'ancrage (9), le frein comporte un ressort circulaire (22) ou un élément équivalent placé sur la face de l'anneau de réglage adjacent à l'aimant qui est tournée vers l'aimant.

9. Frein suivant une quelconque des revendications 1 à 6, caractérisé en ce que la surface extérieure ou intérieure de la plaque d'ancrage (9,38) comporte un filetage (26,41) associé à un filetage (28,42) sur une pièce complémentaire, telle que la tige de poussée/traction (31) d'un frein à tambour, pour permettre le déplacement de la plaque d'ancrage dans la direction axiale.

10. Frein suivant une quelconque des revendications précédentes, caractérisé en ce que les filetages sont à auto-retenue.

## Patentansprüche

1. Elektromagnetische Bremse mit einer Bremsscheibe (6,34), zumindest einer Reibungsfläche (Belag 4,5,33), welche die Bremsscheibe beim Bremsen berührt und an eine Reibungsplatte (2,3) befestigt ist, die durch eine oder mehrere Bremsfedern (18,35) und/oder durch andere Glieder (31,32) bewegt wird, um die Bremskraft zu übertragen, mit zumindest einem Elektromagneten (7,8,25,39,40) und einem Anker (9,23,38), welcher Magnet und Anker dazu dienen, die Reibungsfläche von der Bremsscheibe abzuheben, wenn ein Strom zu dem Magnet geleitet wird, und mit Mitteln zum Ausgleich des Verschleisses der Reibungsfläche und zur Aufrechterhaltung eines im wesentlichen konstanten Spiels zwischen dem Magneten und dem Anker, wenn die Bremse in dem geschlossenen Zustand ist,
dadurch **gekennzeichnet**,
daß die zum Ausgleich des Verschleisses der Reibungsfläche benutzten Mittel aus in dem Anker/Magnet (9,38/25) vorgesehenen Gewindegängen (11a-11c,13; 11′,12′; 26,28; 41,42) und einem oder mehreren Gegenstücken (12a, 12b,19,27,31) und aus einer den Anker/Magnet in den Gewindegängen axial zum Magnet/Anker bewegenden Vorrichtung (14,43) besteht, und daß die ein konstantes Spiel aufrechterhaltenden Mittel aus elastischen Komponenten (17,16′,45) bestehen, die an den Magnet/Anker befestigt sind und in einer Richtung zum Anker/Magnet über eine bestimmte Strecke vorstehen, wobei die diesen Vorsprung aufrechterhaltende Federkraft zum Ausgleich des Verschleisses die den Anker/Magnet zum Magnet/Anker bewegende Kraft übersteigt.

2. Bremse nach Anspruch 1,
dadurch **gekennzeichnet**,
daß die elastischen Komponenten eine O-Ring-Konstruktion (16′), elastische Stifte, Streifen, Stäbe oder Kugeln aufweisen.

3. Bremse nach Anspruch 1,
dadurch **gekennzeichnet**,
daß die elastischen Komponenten zumindest einen federbeaufschlagten Stift (17,45) aufweisen.

4. Bremse nach einem der Ansprüche 1 bis 3,
dadurch **gekennzeichnet**,
daß die den Magnet/Anker zum Ausgleich des Verschleisses zum Anker/Magnet bewegende Vorrichtung eine Schraubenfeder (14,43) ist.

5. Bremse nach Anspruch 4,
dadurch **gekennzeichnet**,
daß sie eine Scheibenbremse ist und die Schraubenfeder (14) um die Motorwelle (20) herum angeordnet ist.

6. Bremse nach Anspruch 4,
dadurch **gekennzeichnet**,
daß sie eine Trommelbremse ist, die zumindest einen Bremsarm (32) aufweist, der die Bremskraft überträgt und an den die Reibungsfläche (33) befestigt ist, und der mit einer durch den Elektromagnet und Anker gehenden und durch diese bewegten Schub/Zugstange (31) verbunden ist, und die eine Bremsfeder aufweist, wobei die Schraubenfeder (43) auf dem Schaft der Schub/Zugstange (31) angeordnet ist.

7. Bremse nach einem der vorstehenden Ansprüche,
dadurch **gekennzeichnet**,
daß der Anker (9) an seinem äußeren Rand mit geschränkten Flügeln (11a-11c) oder Gewindegängen (11′) versehen ist, und daß er zwischen zwei identischen Einstellringen (12a, 12b) montiert ist, die flache Gewindeflächen aufweisen, passend zur Aufnahme der Flügel (11a-11c), oder entsprechende innere Gewindegänge (12′), die in dem Bremsgehäuse (19) vorgesehen sind.

8. Bremse nach einem der vorstehenden Ansprüche,
dadurch **gekennzeichnet**,
daß zur Dämpfung der Stösse des Ankers (9) die Bremse mit einer Kreisfeder (22) oder dergleichen versehen ist, die auf der Seite des nächst dem Magneten befindlichen Einstellrings angeordnet ist, die zu dem Magnet weist.

9. Bremse nach einem der Ansprüche 1 bis 6,
dadurch **gekennzeichnet**,
daß die äußere oder innere Oberfläche des Ankers (9,38) mit einem Gewinde (26,41) versehen ist, passend zu einem Gewinde (28,42) auf einem Gegenstück wie der Schub-/Zugstange (31) einer Trommelbremse, damit der Anker in Axialrichtung bewegt werden kann.

10. Bremse nach einem der vorstehenden Ansprüche,
dadurch **gekennzeichnet**,
daß die Gewindegänge selbsthemmend sind.
